# DEMANDE DE BREVET EUROPEEN

(11) **EP 1 517 564 A1**
(43) Date de publication de la demande: **23.03.2005**
(21) Numéro de dépôt: 03103426.7
(22) Date de dépôt: 17.09.2003
(51) Int. Cl.: H04Q 7/22

(54) **Système et méthode de provision de services localisés vers un terminal sans fil**

(71) Demandeur: Nagracard S.A., 1033 Cheseaux-sur-Lausanne (CH)
(72) Inventeur: Wenger, Joel, 1295 Mies (CH)
(74) Mandataire: Wenger, Joel-Théophile

(57) **Abrégé**

Le but de la présente invention est de proposer un système et une méthode permettant d'automatiser la diffusion d'informations en fonction de paramètres liés à l'utilisateur exploitant ces informations.

Ce but est atteint par un système de diffusion d'informations comprenant une unité centrale (UC) transmettant des données numériques (DT) via un réseau de télécommunications (NET) vers un dispositif de réception (R) d'un utilisateur caractérisé en ce que les données numériques (DT) mises à disposition de l'utilisateur du dispositif de réception (R) sont sélectionnées en fonction de la position géographique dudit dispositif, ladite position étant déterminée par un module de détermination de position (GPS) tel que GPS relié audit dispositif de réception (R).

La présente invention concerne également deux types de dispositifs de réception (R) de données numériques (DT) adaptés selon le mode de diffusion de ces données (DT) à savoir le mode "Broadcast" et le mode "Point to Point".

## Description

La présente invention concerne le domaine de la diffusion d'informations à partir d'un serveur à des utilisateurs via un réseau de télécommunications mobile. Plus particulièrement cette diffusion est ciblée en fonction de critères propres à chaque utilisateur, ce qui signifie que chaque utilisateur connecté au réseau bénéficie d'informations qui lui sont propres.

Les modes de diffusion connus peuvent être classés selon deux catégories:
- Diffusion par un émetteur d'un flux d'information unique dont le contenu est différencié à la réception par l'utilisateur en fonction de droits qu'il a acquis par la souscription d'un abonnement et de critères de sélection locaux. Ce mode est appliqué par exemple dans le domaine de la télévision à péage où le flux est diffusé crypté pour être décrypté par un décodeur chez l'utilisateur selon des droits prépayés (abonnement). Ce mode de diffusion fonctionne généralement de manière unidirectionnelle, c'est-à-dire sans voie de retour allant de l'utilisateur vers l'émetteur.
- Diffusion personnalisée de données selon une requête qu'un utilisateur transmet à un opérateur qui se charge ensuite de diffuser les données demandées. Ce mode s'applique par exemple à la téléphonie mobile où un utilisateur transmet un message court (SMS) pour ensuite recevoir des informations particulières. Ce mode est essentiellement une communication point à point de type bidirectionnel.

Dans cette catégorie, on peut également mentionner les systèmes de télésurveillance ou plus particulièrement de vidéosurveillance où des images sont collectées à partir d'une caméra (émetteur) située à une certaine distance du lieu de d'utilisation des images. Ce type de système possède aussi une voie de retour fixe ou par réseau mobile permettant de télécommander le mouvement et l'optique de la caméra afin d'observer un site sous différents angles. Par exemple une "webcam" (caméra pilotée via Internet) permet de surveiller le trafic routier, des activités dans un local ou la météo en un lieu donné.

Le but de la présente invention est de proposer un système et une méthode permettant d'automatiser la diffusion d'informations en fonction de paramètres liés à l'utilisateur exploitant ces informations.

Ce but est atteint par un système de diffusion d'informations comprenant une unité centrale transmettant des données numériques via un réseau de télécommunications vers un dispositif de réception d'un utilisateur caractérisé en ce que les données numériques mises à disposition de l'utilisateur du dispositif de réception sont sélectionnées en fonction de la position géographique dudit dispositif, ladite position étant déterminée par un module de détermination de position tel que GPS relié audit dispositif de réception.

Dans ce système l'information diffusée est mise à disposition de l'utilisateur sous forme de messages textuels ou vocaux, d'images ou de données numériques en général qui sont spécifiques à la position de l'utilisateur respectivement à la position du dispositif de réception. Ce dispositif comprend un module de détermination de position du type GPS (Global Positioning System) permettant de déterminer ses coordonnées sur le terrain à quelques mètres près.

Les données de position reçues servent donc de critères de sélection parmi les données diffusées par l'unité centrale. La présente invention concerne également une méthode de diffusion d'informations numériques à partir d'un serveur d'une unité centrale connectée à une pluralité de sources vers un dispositif de réception R d'un utilisateur via un réseau de télécommunications caractérisée en ce qu'elle comprend les étapes suivantes:
- détermination de la position géographique du dispositif de réception R au moyen d'un module de détermination de position relié audit dispositif et connecté à un système mondial de localisation tel que GPS,
- recherche et sélection de données en fonction de la position déterminée précédemment,
- mise à disposition des données sélectionnées à l'utilisateur du dispositif de réception R.

Deux variantes de cette méthode de diffusion et de traitement peuvent être mises en oeuvre dans le système selon l'invention:
a) La méthode dite "Broadcast" où l'unité centrale diffuse par voie hertzienne l'information sous forme d'un flux unique et identique pour tous les utilisateurs, le dispositif de réception effectuant un tri en fonction des données reçues par le module de détermination de position. Ce mode peut fonctionner de manière unidirectionnelle sans voie de retour allant du récepteur vers l'unité centrale.
b) La méthode dite "Point to Point" où le dispositif de réception transmet une requête comprenant les données de position transmise par le module de détermination de position à l'unité centrale qui ne diffusera que les données correspondant à cette position. Le tri est ici effectué au niveau de l'unité centrale. Ce mode nécessite donc une communication bidirectionnelle entre le dispositif de réception et l'unité centrale.

L'unité centrale peut collecter les données à diffuser selon deux processus:
A) Collecte périodique de données en provenance d'une pluralité de sources ou fournisseurs suivie d'un stockage dans une base de données. L'unité centrale reçoit de la part de fournisseurs des données auxquelles elle attribue une référence en relation avec leur position, leur source, leur nature ou leur date ou heure de création qui est stockée dans la base de données. Lorsqu'un dispositif de réception transmet une requête de recherche en fonction de sa position, l'unité centrale effectue un tri dans cette base afin de sélectionner toutes les données susceptibles d'intéresser un utilisateur se trouvant à l'endroit dont les coordonnées ont été transmises dans la requête. Par exemple un utilisateur se trouvant sur une route à une position XY désire s'informer sur la situation du trafic entre sa position et son lieu de destination. Le dispositif récepteur transmet sa position XY à l'unité centrale qui utilise cette position comme critère de tri dans la base de donnée. Puis les données ainsi sélectionnées telles que des images en provenance de caméras dans un rayon donné sont transmises au dispositif de réception de l'utilisateur. Celui-ci pourra ainsi modifier son itinéraire si le trafic sur sa route est trop important.
   Selon une variante, le dispositif de réception peut comporter un module d'entrée comprenant un clavier et un affichage permettant à l'utilisateur de compléter une requête contenant déjà sa position. Dans l'exemple ci-dessus l'utilisateur qui ne désire recevoir que des images montrant le trafic dans un rayon de 1 km autour de sa position ajoutera par exemple un code I pour les images et R1 pour le rayon à considérer.
B) Interrogation en ligne d'une pluralité de sources. L'unité centrale reçoit une requête de la part d'un dispositif de réception puis la retransmet à différents fournisseurs. Ces derniers délivrent chacun des données que l'unité centrale stocke dans une mémoire temporaire avant diffusion à l'utilisateur concerné. L'avantage de cette collecte en ligne réside en ce que l'utilisateur bénéficie de données constamment mises à jour. La base de données du processus précédent n'est donc plus nécessaire et le temps de recherche et de traitement des données se trouve ainsi réduit.

L'invention sera mieux comprise grâce à la description détaillée qui va suivre et qui se réfère à la figure unique annexée qui illustre un exemple non limitatif d'un système de diffusion selon l'invention.

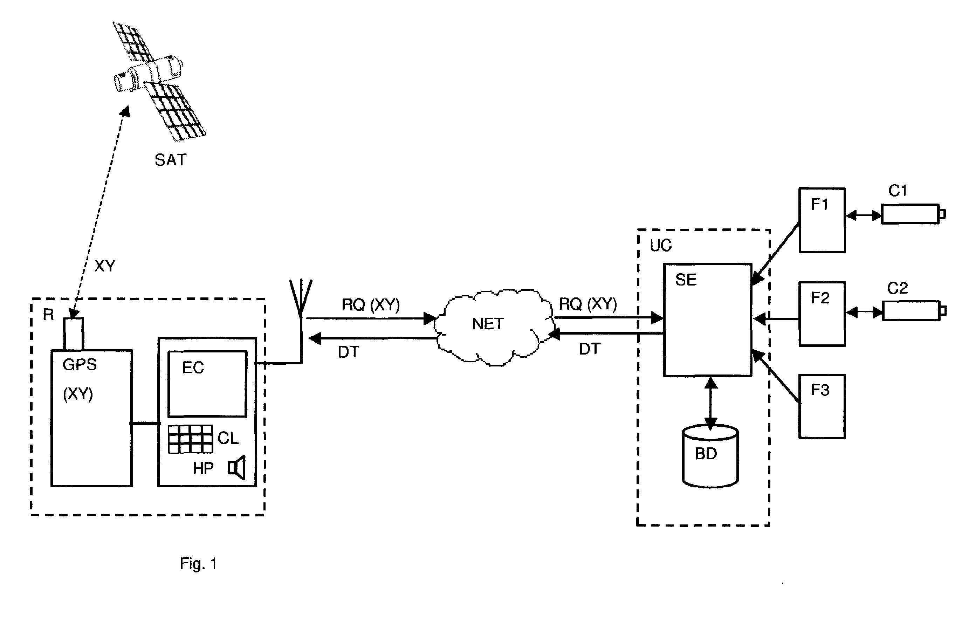

La figure 1 illustre un système comprenant un dispositif de réception R qui communique avec une unité centrale UC via un réseau de téléphonie mobile NET du type GSM, UMTS ou autre. L'unité centrale UC se compose principalement d'un serveur SE et d'une mémoire BD pouvant stocker des données provenant de différents fournisseurs (F1, F2, F3) que le serveur SE peut solliciter selon les requêtes RQ reçues de la part d'un utilisateur d'un dispositif de réception R. Ce dernier comprend un module GPS servant à déterminer sa position géographique à partir de signaux échangés avec le satellite SAT. Il inclut en outre un affichage EC et un clavier CL ou des touches de navigation permettant à l'utilisateur de visualiser les données DT reçues ou de formuler une requête RQ particulière à destination de l'unité centrale UC.

Le fonctionnement de base du système consiste à déterminer d'abord la position du dispositif de réception R par ses coordonnées XY géographiques calculée à partir de signaux que le module de détermination de position GPS reçoit du satellite SAT. Ces coordonnées XY sont ensuite introduites dans une requête RQ que le dispositif de réception R transmet au serveur SE de l'unité centrale UC via le réseau mobile NET.

Dans une variante, l'utilisateur peut compléter la requête RQ avant sa transmission au serveur SE en précisant, par exemple, à l'aide du clavier CL ou par sélection sur un menu affiché, le type de données DT qu'il désire recevoir tel que des messages, des images ou des paramètres liés à ces données tels que la région à considérer à partir de la position calculée.

Le serveur SE de l'unité centrale UC reçoit la requête RQ via le réseau mobile NET et la transmet à la mémoire qui constitue une base de donnée BD où sont répertoriées des données issues de différentes sources (F1, F2, F3). Ces dernières peuvent être reliées à des caméras automatiques (C1, C2) ou des serveurs de tiers traitant des données provenant d'autres sources. Le serveur SE recherche dans la base BD puis sélectionne toutes les données correspondant aux critères de la requête RQ comme par exemple "les images montrant le trafic routier dans un rayon de 1 km autour de la position de coordonnées XY" pour les transmettre au dispositif récepteur R de l'utilisateur se trouvant à l'endroit de coordonnées XY.

Une requête RQ peut être transmise régulièrement au serveur SE en fonction du déplacement du dispositif récepteur R afin d'obtenir des données DT correspondant à chaque nouvelle position. Dans l'exemple ci-dessus, la requête RQ peut être répétée tous les kilomètres et un vecteur indiquant la direction peut être obtenu par le calcul de la différence entre les coordonnées courantes et précédentes. Ce vecteur est calculé par le dispositif de réception R par analyse de l'évolution des coordonnées transmise par le module de détermination de position GPS. Cette façon de procéder permet d'observer les images du trafic réactualisées en permanence sur tout un itinéraire pour une destination donnée afin de pouvoir modifier cet itinéraire en temps utile en cas d'embouteillage ou de présence d'obstacles.

Le dispositif de réception R peut être une partie d'un système de navigation et la position future est calculée par rapport à l'itinéraire déterminé grâce à la connaissance de la carte routière contenue dans le système de navigation. Ce système peut par exemple transmettre la position future d'un véhicule à l'unité centrale UC et donc obtenir des images prises à 500 mètres en avant du véhicule quelle que soit la direction géographique.

Dans une variante le dispositif de réception R comporte une mémoire non volatile permettant de stocker des cartes géographiques d'une région sur lesquelles les données reçues DT de l'unité centrale UC peuvent être reportées. Ainsi, par exemple, un obstacle repéré par une caméra est défini par son emplacement le long d'une route dont les coordonnées peuvent être mises en évidence sur la carte. L'affichage EC du dispositif de réception R permet de visualiser cette carte avec un symbole représentant l'obstacle. De plus, un logiciel associé aux cartes stockées dans le dispositif de réception R peut calculer puis proposer sur la carte affichée un nouvel itinéraire contournant l'obstacle.

D'autres type d'informations dépendant de la position du dispositif de réception peuvent être transmises par le serveur de l'unité centrale, il peut s'agir notamment de messages publicitaires ciblés pour une région, des annonces concernant divers événements locaux (concerts, manifestation sportives, fêtes locales etc.)

Afin de permettre à l'utilisateur d'affiner le tri des informations qu'il désire recevoir, l'unité centrale peut marquer les messages ou les images à diffuser au moyen de signets. Par exemple, les données concernant un événement exceptionnel (accident, incendie, éboulement) seront repérées par un code particulier de manière à permettre à l'utilisateur de compléter la requête contenant la position avec ce code et ainsi recevoir les données marquées en priorité.

Selon le mode de diffusion de type "Broadcast" mentionné plus haut, l'unité centrale UC collecte des données auprès des fournisseurs ou caméras (F1, F2, F3) concernant une région pour les introduire dans un flux de données DT numériques qui sera diffusé de manière uniforme dans toute la région. Le tri des données du flux sera effectué dans le dispositif de réception R de chaque utilisateur se trouvant dans le rayon de diffusion en fonction de sa position déterminée par le module GPS.

Les données DT diffusées en mode "Broadcast" ou "Point to Point" par l'unité centrale UC du système sont de préférence cryptées. La décryption de ces données DT par un dispositif de réception R ne sera possible seulement si l'utilisateur a acquis les droits nécessaires soit sous forme de pré-paiement, soit par paiement en ligne.

Les documents W00167761 et W00167762 décrivent des systèmes de facturation sans abonnement de données numériques à accès contrôlé cryptées diffusées via un réseau mobile qui peuvent être adaptés sur le système selon l'invention. Il s'agit respectivement de la facturation hors ligne, c'est-à-dire le débit des coûts d'accès à partir d'un montant stocké dans une carte à puce insérée dans le dispositif de réception et de la facturation en ligne, c'est-à-dire le paiement via le réseau mobile et une connexion sécurisée à un centre de facturation distant.

Il est également possible d'incorporer le système de l'invention dans la palette des services offerts par un opérateur de téléphonie mobile. Dans un tel cas, la facturation peut s'effectuer dans le cadre d'un abonnement en combinaison avec celle des conversations téléphoniques et autres services comme les messages courts SMS ou le WAP (Wireless Application Protocol).

L'invention concerne également deux types de dispositifs de réception R de données numériques DT en provenance d'une unité centrale UC via un réseau de télécommunications comprenant des moyens de réception et des moyens de reproduction audio-visuels desdites données. Le premier est adapté à la réception de données diffusées en mode "Broadcast" et le second à la réception de données diffusées en mode "Point to Point".

Le premier est caractérisé en ce qu'il comporte un module de détermination de position GPS et des moyens de sélection de données parmi les données DT reçues de l'unité centrale en fonction de la position géographique dudit dispositif R, ladite position étant calculée par le module de détermination de position GPS, les données sélectionnées étant reproduites par les moyens audio-visuels (HP, EC). Ces derniers sont constitués par un haut-parleur HP et un affichage EC en général sous forme d'écran graphique.

Le second est caractérisé en ce qu'il comporte un module de détermination de position GPS et des moyens de transmission de requêtes comprenant au moins la position géographique dudit dispositif à l'unité centrale UC via le réseau mobile NET, les données reçues et reproduites par les moyens audio-visuels (HP, EC) dépendant des requêtes RQ transmises.

Il comprend en outre une interface utilisateur servant à introduire des données additionnelles dans les requêtes RQ contenant la position dudit dispositif. Cette interface comprend un affichage EC combiné avec un clavier CL et/ou des touches de navigation. L'affichage EC est en général commun avec celui servant à la reproduction des données numériques (messages et / ou images).

Les deux types de dispositifs de réception R peuvent être intégré dans plusieurs types d'appareils numériques mobiles existants, ce qui nécessite, dans la plupart des cas, la mise en place ou la connexion du module de détermination de position GPS et une adaptation de la configuration matérielle et logicielle. Il s'agit par exemple de dispositifs comme:
- le téléphone mobile
- l'assistant personnel (PDA) ou l'ordinateur personnel (PC) portable
- le récepteur DAB (Digital Audio Broadcasting) ou DVB-T (Digital Video Broadcasting- Terrestrial) mobile, ce dispositif est en général pourvu d'une voie de retour via le réseau de téléphonie mobile.
- le récepteur GPS: ce cas nécessite l'intégration de la partie téléphonie mobile et l'adaptation de l'affichage et du clavier. Selon une autre réalisation, il peut être relié au moyen d'un câble à un téléphone mobile ou à un récepteur DAB / DVB-T classique. Cette liaison nécessite, bien entendu, une configuration adéquate des deux appareils tant au niveau matériel que logiciel.

## Revendications

1. Système de diffusion d'informations comprenant une unité centrale UC transmettant des données numériques DT via un réseau de télécommunications (NET) vers un dispositif de réception R d'un utilisateur **caractérisé en ce que** les données numériques DT mises à disposition de l'utilisateur du dispositif de réception R sont sélectionnées en fonction de la position géographique dudit dispositif R, ladite position étant déterminée par un module de détermination de position tel que GPS relié audit dispositif de réception R.

2. Système selon la revendication 1 **caractérisé en ce que** l'unité centrale UC comprend un serveur SE chargé de collecter des données issues d'une pluralité de sources (F1, F2, F3) et de diffuser ces données via le réseau de télécommunications (NET).

3. Système selon les revendications 1 ou 2 **caractérisé en ce que** l'unité centrale UC comprend une base de données BD servant à stocker les données en provenance des différentes sources (F1, F2, F3) avec une référence en relation selon leur source, leur nature ou leur date ou heure de création.

4. Système selon les revendications 1 à 3 **caractérisé en ce que** le dispositif de réception comprend un affichage EC servant à visualiser les données DT reçues et un clavier CL ou des touches de navigation servant à formuler une requête RQ particulière à destination de l'unité centrale UC.

5. Système selon les revendications 1 et 2 **caractérisé en ce que** les données diffusées par le serveur SE de l'unité centrale UC forment un flux comprenant les données collectées, ledit flux est reçu par le dispositif de réception comportant des moyens de sélection de données dans le flux en fonction de la position géographique dudit dispositif déterminée par le module connecté au système GPS.

6. Système selon les revendications 1 à 4 **caractérisé en ce que** le dispositif de réception R comprend des moyens de transmission d'une requête RQ comprenant les coordonnées de position dudit dispositif au serveur SE de l'unité centrale UC via le réseau de télécommunication NET, ledit serveur SE comportant des moyens de recherche et de sélection dans la base de données BD de données en fonction des coordonnées contenues dans la requête RQ et des moyens de diffusion des données ainsi sélectionnées vers le dispositif de réception R.

7. Système selon la revendication 6 **caractérisé en ce que** le réseau de télécommunication NET est un réseau de téléphonie mobile du type GSM, UMTS ou autre.

8. Système selon les revendications 1 à 7 **caractérisé en ce que** les données diffusées par le serveur de l'unité centrale sont cryptées et **en ce que** le dispositif de réception comporte des moyens de décryption desdites données en fonction de droits acquis par l'utilisateur sous forme de pré-paiement, de paiement en ligne ou d'abonnement.

9. Méthode de diffusion d'informations numériques à partir d'un serveur SE d'une unité centrale UC connectée à une pluralité de sources (F1, F2, F3) vers un dispositif de réception R d'un utilisateur via un réseau de télécommunications NET **caractérisée en ce qu'**elle comprend les étapes suivantes:
- détermination de la position géographique du dispositif de réception R au moyen d'un module de détermination de position relié audit dispositif et connecté à un système mondial de localisation tel que GPS,
- recherche et sélection de données en fonction de la position déterminée précédemment,
- mise à disposition des données sélectionnées à l'utilisateur du dispositif de réception R.

10. Méthode selon la revendication 9 **caractérisée en ce qu'**un flux de données numériques est diffusé de manière unidirectionnelle à partir du serveur SE et que le dispositif de réception R recherche et sélectionne des données en fonction de la position dudit dispositif R.

11. Méthode selon la revendication 9 **caractérisée en ce qu'**elle comprend les étapes suivantes:
- transmission par le dispositif de réception R d'une requête RQ comprenant les coordonnées XY de la position dudit dispositif R au serveur SE de l'unité centrale UC via le réseau de télécommunications NET,
- recherche et sélection de données en fonction des coordonnées XY contenues dans la requête RQ dans une base de donnée BD alimentée à partir des sources (F1, F2, F3) auxquelles le serveur SE est connecté.
- diffusion vers le dispositif de réception R via le réseau de télécommunications NET des données DT sélectionnées.

12. Méthode selon les revendications 9 et 11 **caractérisée en ce que** la requête RQ contenant les coordonnées XY de la position du dispositif de réception R est complétée par des données additionnelles précisant le type de données à recevoir tel que des messages, des images ou des paramètres liés à ces données.

13. Méthode selon la revendication 12 **caractérisée en ce que** la requête RQ est complétée par l'utilisateur du dispositif de réception R au moyen du clavier CL et de l'affichage EC dudit dispositif.

14. Dispositif de réception de données numériques DT en provenance d'une unité centrale UC via un réseau de télécommunications NET comprenant des moyens de réception et des moyens de reproduction audio-visuels (HP, EC) desdites données **caractérisé en ce qu'**il comporte un module de détermination de position GPS et des moyens de sélection de données parmi les données DT reçues de l'unité centrale UC en fonction de la position géographique dudit dispositif, ladite position étant calculée par le module de détermination de position GPS, les données sélectionnées étant reproduites par les moyens audio-visuels.

15. Dispositif selon la revendication 14 **caractérisé en ce que** les moyens de réception et les moyens de reproduction audio-visuels (HP, EC) sont inclus dans un téléphone mobile et que le module de détermination de position GPS est soit connecté, soit intégré audit téléphone mobile.

16. Dispositif selon la revendication 15 **caractérisé en ce que** les moyens de réception et les moyens de reproduction audio-visuels (HP, EC) sont inclus dans un récepteur DAB ou DVB-T mobile et que le module de détermination de position GPS est soit connecté, soit intégré audit récepteur.

17. Dispositif de réception de données numériques en provenance d'une unité centrale UC via un réseau de télécommunication NET comprenant des moyens de réception et des moyens de reproduction audio-visuels (HP, EC) desdites données **caractérisé en ce qu'**il comporte un module de détermination de position GPS et des moyens de transmission de requêtes RQ comprenant au moins la position géographique dudit dispositif à l'unité centrale UC via le réseau mobile NET, les données reçues et reproduites par les moyens audio-visuels dépendant des requêtes RQ transmises.

18. Dispositif selon la revendication 17 **caractérisé en ce qu'**il comprend une interface utilisateur servant à introduire des données additionnelles dans les requêtes RQ contenant la position dudit dispositif.

19. Dispositif selon les revendications 17 et 18 **caractérisé en ce que** les moyens de réception, les moyens de reproduction audio-visuels, les moyens de transmission de requêtes et l'interface utilisateur sont inclus dans un téléphone mobile et que le module de détermination de position GPS est soit connecté, soit intégré audit téléphone mobile.

20. Dispositif selon les revendications 17 et 18 **caractérisé en ce que** les moyens de réception, les moyens de reproduction audio-visuels (HP, EC), les moyens de transmission de requêtes et l'interface utilisateur sont inclus dans un récepteur DAB ou DVB-T mobile et que le module de détermination de position est soit connecté, soit intégré audit récepteur.

21. Dispositif selon les revendications 14 à 20 **caractérisé en ce que** les moyens de reproduction audio-visuels sont constitués par un affichage EC et un haut-parleur HP.

22. Dispositif selon les revendications 17 à 20 **caractérisé en ce que** l'interface utilisateur comprend un affichage EC combiné avec un clavier CL et/ou des touches de navigation.
